# EUROPEAN PATENT SPECIFICATION

(11) **EP 4 457 048 B1**
(45) Date of publication and mention of the grant of the patent: **04.03.2026**
(21) Application number: 22829910.3
(22) Date of filing: 15.12.2022
(51) Int. Cl.: B23K 11/00, B23K 11/02, B23K 11/04, B21D 53/74, B23K 101/06, B23K 101/28, B23K 103/02, B23K 103/04

(54) **PROCESS AND PLANT FOR THE MANUFACTURE OF REINFORCING BARS FOR PROFILED ELEMENTS FOR WINDOW/DOOR FRAMES**
VERFAHREN UND ANLAGE ZUR HERSTELLUNG VON ARMIERUNGSSTÄBEN FÜR PROFILELEMENTE VON FENSTER- ODER TÜRRAHMEN
PROCÉDÉ ET INSTALLATION DE FABRICATION DE BARRES D'ARMATURE POUR DES ÉLÉMENTS PROFILÉS POUR DES DORMANTS DE FENÊTRE/PORTE

(30) Priority: 30.12.2021 IT 202100033134
(43) Date of publication of application: 06.11.2024
(73) Proprietor: Graf Synergy S.r.L., 41015 Nonantola (MO) (IT)
(72) Inventor: VACCARI, Andrea, 41015 Nonantola (MO) (IT)
(74) Representative: Luppi, Emanuele
(86) International application number: PCT/IB2022/062317
(87) International publication number: WO 2023/126746

(56) References cited:
- EP-A1- 0 192 921
- EP-B2- 0 291 499
- WO-A1-2021/144755

## Description

The present invention relates to a process and plant for the manufacture of reinforcing bars for window/door frames according to the preamble of claims 1 and 12 (see for example WO 2021/144755 A1).

### Background Art

In the window/door frame industry, the use of bars for reinforcing profiled elements for window/door frames made of plastic material is well known. The reinforcing bars are generally made of metallic material, such as steel or other alloys, and are inserted into the internal cavity of the profiled elements in order to impart greater strength and toughness to the final window/door frame. In addition, the reinforcing bars serve as supports for further mechanical parts necessary for the operation of the window/door frame, such as hinges, handles, locking systems, etc.

The known manufacturing processes and related plants involve the cutting of metal bars depending on the length of the profiled element to be reinforced, to obtain, precisely, the relevant reinforcing bar. In particular, the metal bars can be obtained, e.g., by means of extrusion of molten metallic material or by folding metal sheets.

Metal bars are generally of extended lengths, such as e.g. 5-6 meters, and can be cut numerous times to obtain as many reinforcing bars.

The reinforcing bars can be gradually inserted directly into the relevant profiled element at the end of each cutting operation or stored together and installed at a later time.

The known processes and plants, however, do have some drawbacks.

As mentioned earlier, metal bars are provided with dimensions having a length of about 5-6 meters and the cutting operations inevitably cause the formation of residual ending portions that are too short in size to be used as reinforcing bars.

Such residual bars are, therefore, discarded and a new metal bar is subjected to cutting.

After a first bar is machined, then, the remaining residual bar must be removed from the production line to make room for a second bar.

This operation, in addition to interrupting the production operations and consequently lengthening the related timeline, also causes the formation of a large amount of waste products that greatly impacts the production costs of the reinforcing bars.

In fact, the discarded residual bars are sent for disposal, thus reducing the amount of material that can actually be used. In addition, this inconvenience requires the purchase of an excess number of metal bars in order to ensure the production of the required number of reinforcing bars.

Processes and plants of the known type for the manufacture of reinforcing bars are disclosed in EP 0 291 499 B2 and EP 0 192 921 A1.

### Description of the Invention

The main aim of the present invention is to devise a process and a plant for the manufacture of reinforcing bars for profiled elements for window/door frames which allow avoiding the formation of the waste products.

Another object of the present invention is to devise a process and a plant for the manufacture of reinforcing bars for profiled elements for window/door frames which allow avoiding interruptions in the manufacturing process and optimizing the operating schedules.

A further object of the present invention is to devise a process and plant for the manufacture of reinforcing bars for profiled elements for window/door frames which allow keeping production and operating costs of the production plant low.

Another object of the present invention is to devise a process and plant for the manufacture of reinforcing bars for profiled elements for window/door frames that can overcome the aforementioned drawbacks of the prior art within the framework of a simple, rational, easy and effective to use as well as cost-effective solution.

The aforementioned objects are achieved by the present invention through a process for the manufacture of reinforcing bars for profiled elements for window/door frames having the characteristics of claim 1.

The aforementioned objects are further achieved by the present invention through a plant for the manufacture of reinforcing bars for profiled elements for window/door frames having the characteristics of claim 12.

Further preferred embodiments of the present invention as defined in claims 1 and 12 are defined in claims 2-11 and 13-15 respectively.

### Brief Description of the Drawings

Other characteristics and advantages of the present invention will become more apparent from the description of a preferred, but not exclusive, embodiment of a process and a plant for the manufacture of reinforcing bars for profiled elements for window/door frames, illustrated by way of an indicative, yet non-limiting example, in the accompanying tables of drawings wherein:
Figure 1 is an axonometric view of the plant according to the invention;
Figure 2 is an axonometric view of the plant in the execution of a phase of positioning the residual bar of the process according to the invention;
Figure 3 is an axonometric view of the plant in the execution of a phase of positioning the second bar of the process according to the invention;
Figure 4 is an axonometric view of the plant in the execution of a sub-phase of application of the electrode assemblies of the process according to the invention;
Figure 5 is an axonometric view of the plant in the execution of a sub-phase of joining of the process according to the invention;
Figure 6 is a top view of the welding means in the execution of a sub-phase of joining of the process according to the invention;
Figure 7 is a side view of the welding means in carrying out a sub-phase of compression of the process according to the invention;
Figure 8 is an axonometric view of the plant in the execution of a phase of cutting the welded bar of the process according to the invention.

### Embodiments of the Invention

With particular reference to these figures, reference numeral 1 globally denotes a plant usable in the embodiment of this process for the manufacture of reinforcing bars for profiled elements for window/door frames.

The process according to the invention first comprises one phase of providing at least one first bar 2 and at least one second bar 3 made of at least one metallic material.

The bars 2, 3 are elongated bodies made of at least one metallic material, e.g., iron, steel or other alloys, and can be obtained, e.g., by extrusion of such a molten metallic material or by folding the metal sheets.

In the embodiment shown in the figures, the bars 2, 3 are hollow and have a square cross section.

It cannot, however, be ruled out that the bars 2, 3 are provided with a section of different shape, e.g., "U-shaped", "L-shaped" or be of the slab-shaped type. Likewise, it cannot be ruled that the bars 2, 3 are solid, i.e., not hollow.

The bars 2, 3 extend along relevant longitudinal directions and are each provided with a first ending surface 4 and with a second ending surface 5 substantially perpendicular to the relevant longitudinal direction.

The plant 1 comprises holding means 6 adapted to hold at least the first bar 2 and the second bar 3. Appropriately, the holding means 6 are adapted to hold a plurality of bars, as will be better described later in this disclosure. However, for simplicity of exposition, only a first bar 2 and a second bar 3 will be referred to in the remainder of this disclosure.

The process comprises a phase of cutting the first bar 2 to obtain at least one reinforcing bar 100 insertable in a relevant profiled element for window/door frames and a residual bar 7 provided with the second ending surface 5.

For this purpose, the plant 1 is provided with cutting means 8 adapted to cut the first bar 2 and through which the phase of cutting is carried out.

Depending on the length of the reinforcing bars 100 which one intends to obtain, the first bar 2 can be cut several times to obtain as many reinforcing bars 100.

The process then comprises repeating the phase of cutting the first bar 2 depending on the length of the desired reinforcing bars 100.

The residual bar 7 corresponds to the ending section of the first bar 2, resulting from the cutting operations, and which is too short to be used as reinforcing bar 100.

Thus, the process involves a phase of positioning the second bar 3 aligned with the residual bar 7 with respect to a direction of forward movement D substantially parallel to the longitudinal directions, with the first ending surface 4 of the second bar 3 facing the second ending surface 5 of the residual bar 7.

For this purpose, the plant 1 comprises positioning means 9 adapted to move each of the bars 2, 3, 7 along the direction of forward movement D.

The process then comprises a resistance butt welding phase of the second bar 3 and of the residual bar 7 carried out by means of a current flow through the ending surfaces 4, 5 facing each other to obtain a welded bar 10.

In fact, the plant 1 comprises resistance welding means 11 adapted to carry out this phase of welding.

In the context of this disclosure, the expression "butt welding" refers to a type of welding carried out by means of the juxtaposing of the ending surfaces 4, 5 of the second bar 3 and of the residual bar 7.

As known to the industry technician, the resistance butt welding is an autogenous pressure welding method in which the metallic material is heated by electrical resistance.

The welded bar 10 is, therefore, formed by the residual bar 7 and by the second bar 3 joined together in a welding area 12.

Advantageously, the process comprises the repetition of the phases of cutting, positioning and welding for the welded bar 10.

The welded bar 10 then undergoes the phase of cutting again to produce new reinforcing bars 100 and any new residual bar 7 is welded back to a subsequent bar.

Thus, this process allows avoiding the formation of waste products and to carry out continuous production of the reinforcing bars 100.

The residual bar 7 resulting from the cutting operations of a first bar 2 is, in fact, always recovered by means of welding to a subsequent second bar 3.

Advantageously, the phases are carried out continuously on the same line of work 13 extending along the direction of forward movement D.

In more detail, with reference to the plant 1 shown in the figures, the line of work 13 is partly defined by the holding means 6, by the resistance welding means 11 and by the cutting means 8, arranged in succession with each other along the direction of forward movement D.

This process allows avoiding interruptions in the production process, thus reducing the time and costs associated therewith.

The resistance welding means 11 comprise electrode assemblies 14, 15 applicable to the second bar 3 and to the residual bar 7 and adapted to determine the current flow.

Usefully, the phase of welding comprises a sub-phase of application of the electrode assemblies 14, 15 to the second bar 3 and to the residual bar 7 at the point where the relevant ending surfaces 4, 5 are located to determine the current flow.

Specifically, the electrode assemblies 14, 15 comprise a first electrode assembly 14 applicable to the residual bar 7 and a second electrode assembly 15 applicable to the second bar 3.

The resistance welding means 11 also comprises a transformer assembly 16 connected to the electrode assemblies 14, 15. For simplicity sake, the connections between the electrode assemblies 14, 15 and the transformer assembly 16 are not shown in the figures.

The phase of welding also comprises a sub-phase of joining the ending surfaces 4, 5 to each other to cause the formation of an electric arc.

As is well known, an electric arc is an electric discharge that is generated between two metal parts which are moved close together and connected to an electric circuit.

Specifically, the sub-phase of joining is carried out by means of mutual approach of the second bar 3 and of the residual bar 7.

As the ending surfaces 4, 5 move close, the electric circuit tends to close and to open repeatedly due to the inevitable mechanical rebounds that are generated. This causes the formation of electric arcs which, in this particular case, is accompanied by high voltages combined with high currents.

The electric arc is accompanied by a strong development of heat by the Joule effect, which allows even very high temperatures to be reached (3,000°C - 4,000°C) leading to softening and eventually melting the metallic material, very quickly.

In more detail, the electric arc causes the formation of plasma involving heat generation.

In order to achieve this, it is necessary to apply a high-intensity current. Advantageously, the current is in the range of 1 KA to 20 KA.

Preferably, the current is in the range of 5 KA to 10 KA.

By doing so, it is possible to generate a large amount of energy and to optimize the welding process to the maximum, thus speeding up the operating time.

The reduced operating times also allow limiting the formation of oxides of the metallic material. As the temperature increases, in fact, oxidation reactions affecting the metallic material of the bars are even more favored and could result in the generation of large amounts of metal oxides. The presence of metal oxides makes the welding area insufficiently resistant to mechanical stress, thus compromising the entire welding process.

With power being equal, the aforementioned current intensity values are obtained by reducing the electrical voltage, by means of the transformer assembly 16.

Usefully, the sub-phase of joining is carried out so as to lead the metallic material to softening.

Usefully, the sub-phase of joining is carried out for a time of between 0.1" and 10", preferably between 1" and 5", even more preferably between 1.5" and 2".

Specifically, the sub-phase of joining is carried out in such a way as to cause the formation of a sufficient amount of softened metallic material that imparts suitable strength to the welding area but, nevertheless, does not result in the creation of an excessively protruding weld bead.

In fact, this phase of resistance welding allows minimizing the formation of a weld bead protruding outwards.

Traditional welding processes, especially those involving the use of a filler material, such as e.g. coated electrode welding, can cause the formation of an abundant weld bead that protrudes from the welding area.

In this particular case, the presence of a protruding weld bead could compromise the insertion of the reinforcing bar into the relevant profiled element for window/door frames. In fact, the reinforcing bars are generally provided with a section that settles to size in the cavity defined by the profiled element for window/door frames and a protruding weld bead would prevent the insertion thereof.

If traditional welding processes are applied, therefore, the reinforcing bar would have to undergo further machining to remove part of such a weld bead.

This process, therefore, allows further fixing this technical problem and avoiding subsequent machining of the reinforcing bars 100 and, in this sense, allows further reducing production timeline.

In more detail, the sub-phase of joining is carried out so that the thickness of the protruding weld bead is less than a minimum value.

The minimum value is determined depending on the dimensions of the internal cavity of the profiled element for window/door frames and the cross-sectional dimensions of the reinforcing bar 100. As a result, for example, while in some cases a protruding bead of 2 mm thickness might still allow the reinforcing bar 100 to be inserted inside the relevant profiled element for window/door frames, in other cases even just a protruding bead of 0.5 mm thickness might compromise this operation.

Usefully, the sub-phase of joining is carried out after the phase of application of the electrode assemblies 14, 15.

In this way, during the sub-phase of joining, the second bar 3 and the residual bar 7 are already connected to the transformer assembly 16 and the electric arc is formed as soon as the ending surfaces 4, 5 reach the minimum distance required, making welding extremely fast with the consequent aforementioned advantages.

Alternative embodiments are however provided wherein the sub-phase of joining is carried out prior to the phase of application of the electrode assemblies 14, 15. In other words, the ending surfaces 4, 5 are first joined and placed in contact with each other, after which voltage is applied to the second bar 3 and to the residual bar 7.

Finally, the phase of welding comprises a sub-phase of mutual compression of the ending surfaces 4, 5.

During this phase, the softened metallic material of the ending surfaces 4, 5 join intimately and, as a result of cooling, form the welding area 12.

Specifically, during the sub-phase of compression, the electrode assemblies 14, 15 are moved away from the second bar 3 and from the residual bar 7, thus interrupting the current flow and allowing the metallic material to cool.

Usefully, the sub-phase of compression is carried out for a time of between 0.5" and 7", preferably of between 0.5" and 1.5".

At the same time, the sub-phase of compression is carried out at a pressure of between 1 Pa and 10 MPa.

Following the phase of welding, the second bar 3 and the residual bar 7 are joined together through a welding area 12 that is substantially continuous, strong and provided with a contained weld bead.

**In** addition, this process allows for autogenous welding which, as known to the technician in the field, allows metallic materials to be joined without the use of the filler material.

The filler materials are materials that are heated up to fusion and are transferred to the area to be welded. Once solidified, the filler materials operate as a bridge between the welded parts. However, the filler material is not always the same as the metal parts to be welded and may have different physical and mechanical properties. In addition, the welding times using filler materials are generally very long.

The phase of resistance welding makes it possible to achieve, in a very short time, a continuity of material of the reinforcing bar 100 thus making the welding area 12 sufficiently strong and robust and avoiding possible differences in the physical-mechanical behavior caused by the use of the filler materials.

This process will now be described in more detail with reference to the components of the plant 1.

The plant 1 comprises holding means 6 adapted to hold at least the first bar 2 and the second bar 3.

Specifically, the holding means 6 comprise a holding surface 17 adapted to receive and support the bars 2, 3 arranged substantially side by side and parallel to each other.

In more detail, the holding means 6 comprise a set of arms 18 extending along relevant directions of development, arranged substantially parallel to each other and defining the holding surface 17.

The arms 18 are adapted to hold the bars 2, 3 with the relevant longitudinal directions substantially perpendicular to the development directions.

The plant 1 also comprises positioning means 9 associated with the holding means 6 and adapted to move the bars 2, 3, 7, 10 along the direction of forward movement D.

In more detail, the positioning means 9 are configured to move the bars 2, 3, 7, 10 as they move towards the cutting means 8.

Specifically, the positioning means 9 are adapted to move each bar 2, 3, 7, 10 from an operating station, defined on the holding means 6, to a cutting station, defined on the cutting means 8.

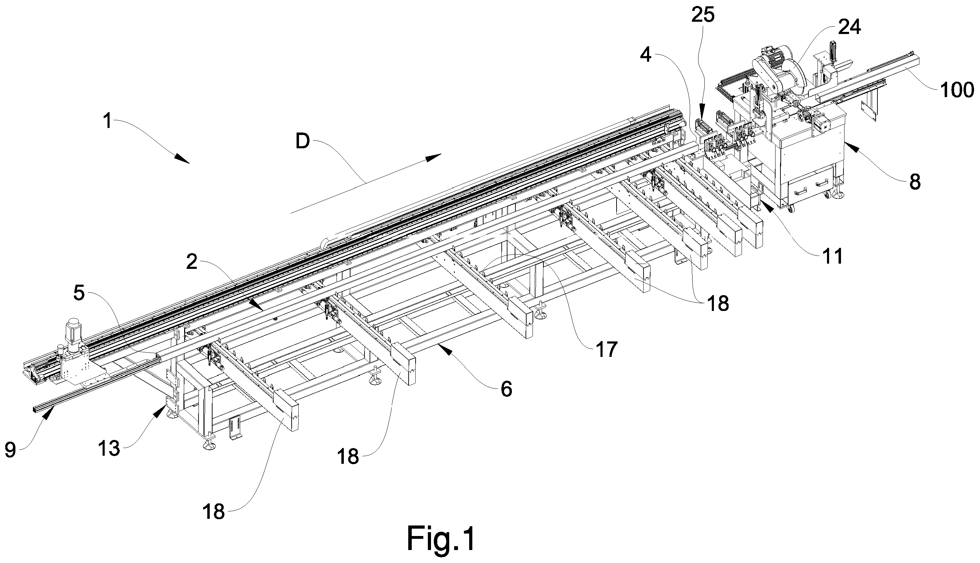

The process comprises a phase of movement of the first bar 2 along the direction of forward movement D, carried out by means of the positioning means 9 (Figure 1).

In more detail, the positioning means 9 determine the forward movement of the first bar 2 with respect to the cutting means 8 by the distance corresponding to the length of the reinforcing bar 100 to be produced.

The positioning means 9 comprise at least one pusher body 19 adapted to abut against the second ending surface 5 of the first bar 2.

The pusher body 19 is movable by sliding along the direction of forward movement D to push the first bar 2 from the operating station to the cutting station.

The positioning means 9 also comprise at least one guiding unit 20 associated with the holding means 6, which extends parallel to the direction of forward movement D and supports the pusher body 19 by sliding.

The positioning means 9 then comprise at least one movement unit 21 adapted to move the pusher body 19 by sliding along the direction of forward movement D.

The movement unit 21 comprises a rack body 22 extending parallel to the direction of forward movement D, a pinion associated with the pusher body 19 and meshing on the rack body 22 and an actuator device 23 connected to the pinion and adapted to set the latter in rotation.

The rotation of the pinion causes the pusher body 19 to slide along the direction of forward movement D.

The movement unit 21 allows extremely precise and accurate movement of the bars 2, 3, 7, 10 and enables their forward movement by a distance corresponding to the length of the reinforcing bar 100 one wishes to obtain.

The plant 1 also comprises cutting means 8 adapted to cut the bars 2, 3, 10.

The cutting means 8 comprise a cutting device 24 adapted to cut the bar 2, 3, 10 along a cutting plane transversal to the relevant longitudinal direction.

In the embodiment shown in the figures, the cutting plane is substantially perpendicular to the longitudinal direction. It cannot, however, be ruled out that the cutting plane may be inclined with respect to the longitudinal direction.

Again with reference to the embodiment shown in the figures, the cutting device 24 comprises a blade tool.

There are, however, alternative embodiments wherein the cutting device 24 comprises a plasma device.

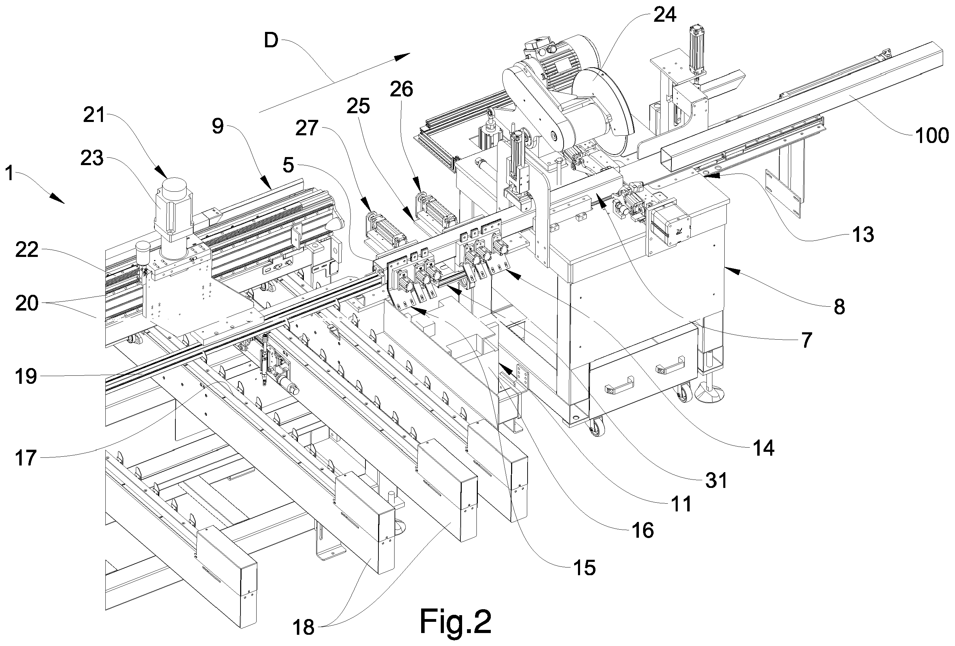

Upon completion of the cutting operations, the process comprises a phase of positioning the residual bar 7 in a welding station (Figure 2).

The welding station is defined by the resistance welding means 11, which are positioned between the holding means 6 and the cutting means 8.

The phase of positioning the residual bar 7 is carried out by means of the positioning means 9.

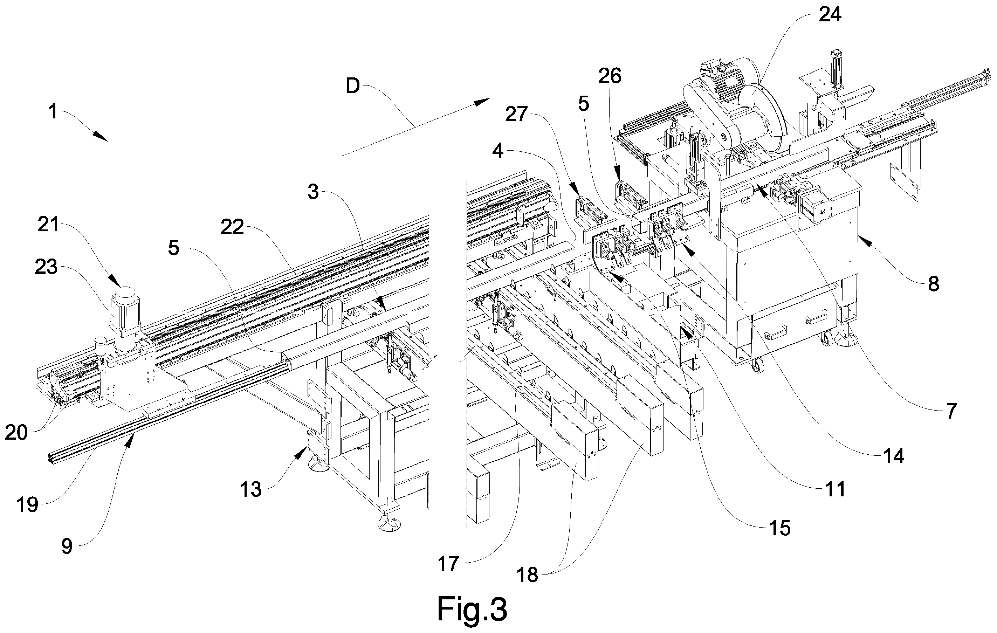

The process then comprises the phase of positioning the second bar 3 aligned with the residual bar 7, with the first ending surface 4 of the second bar 3 facing the second ending surface 5 of the residual bar 7 (Figure 3).

The phase of positioning of the second bar 3 is also carried out by means of the positioning means 9.

The plant 1 also comprises retaining means 25 adapted to retain the residual bar 7 and the second bar 3.

The retaining means 25 are associated with the resistance welding means 11.

The retaining means 25 comprise a first retaining assembly 26 of the residual bar 7 and a second retaining assembly 27 of the second bar 3.

Each of the retaining assemblies 26, 27 comprises a bearing plane 28 that is substantially horizontal and adapted to receive and support the relevant bar 3, 7 and an abutment wall 29 that is substantially vertical and parallel to the direction of forward movement D and adapted to receive the relevant bar 3, 7 in abutment.

Each of the retaining assemblies also comprises a clamping assembly 30 which can be operated to keep the bars 3, 7 secured to the relevant abutment walls 29.

The clamping assembly 30 is associated with the bearing plane 28 and is of the type of a vice operated horizontally by a pneumatic cylinder.

Once secured by means of the retaining means 25, the bars 3, 7 are welded together.

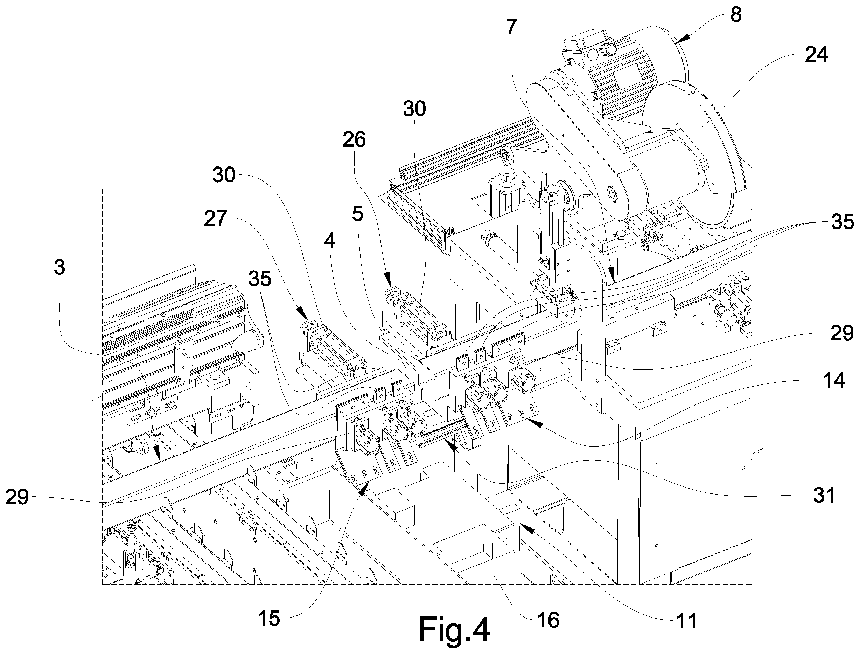

The electrode assemblies 14, 15 are, therefore, applied to the relevant bars 3, 7 (Figure 4).

Usefully, the electrode assemblies 14, 15 are associated with the retaining means 25.

Specifically, the first electrode assembly 14 is associated with the abutment wall 29 of the first retaining assembly 26 and the second electrode assembly 15 is associated with the abutment wall 29 of the second retaining assembly 27.

The electrode assemblies 14, 15 are movable with respect to the retaining means 25 between a home position, wherein they are moved away from the residual bar 7 and from the second bar 3, and a work position, wherein they are in contact with the residual bar 7 and with the second bar 3 and cause the current flow.

In more detail, the resistance welding means 11 comprise actuating means 34 of the pneumatic type adapted to move the electrode assemblies 14, 15 between the home position and the work position.

In accordance with the embodiment shown in the figures, the electrode assemblies 14, 15 each comprise a plurality of electrodes 35 that are substantially flat and adapted to adhere to the surface of the bars 3, 7. In particular, the electrodes 35 are electrodes of the braided copper type.

In this way, the electrode assemblies 14, 15 have an extended contact surface with the relevant bars 3, 7, which allows effective current transmission and avoids excessive heat generation.

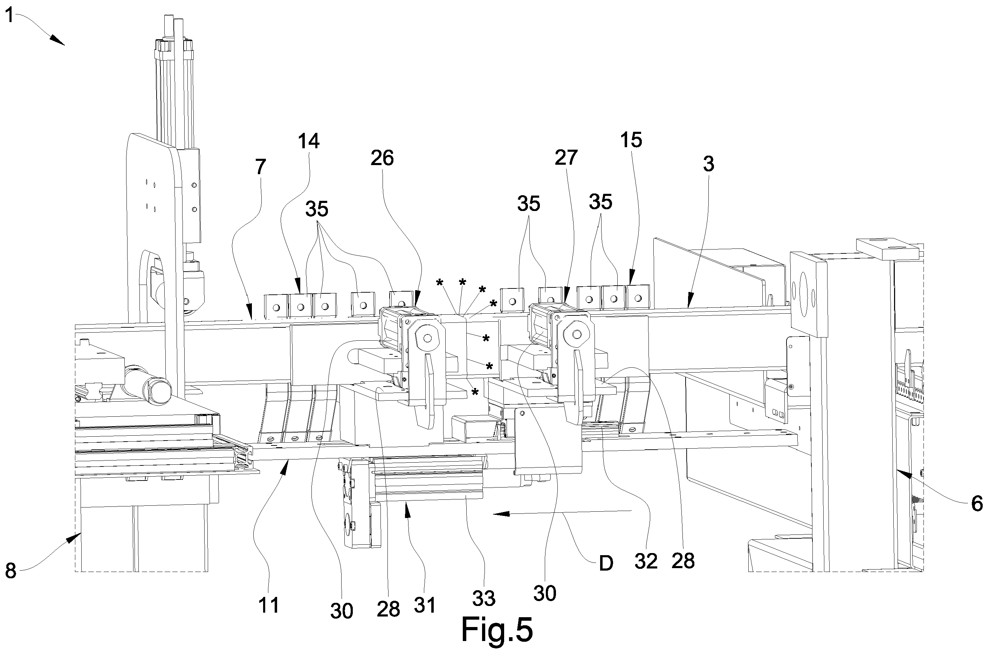

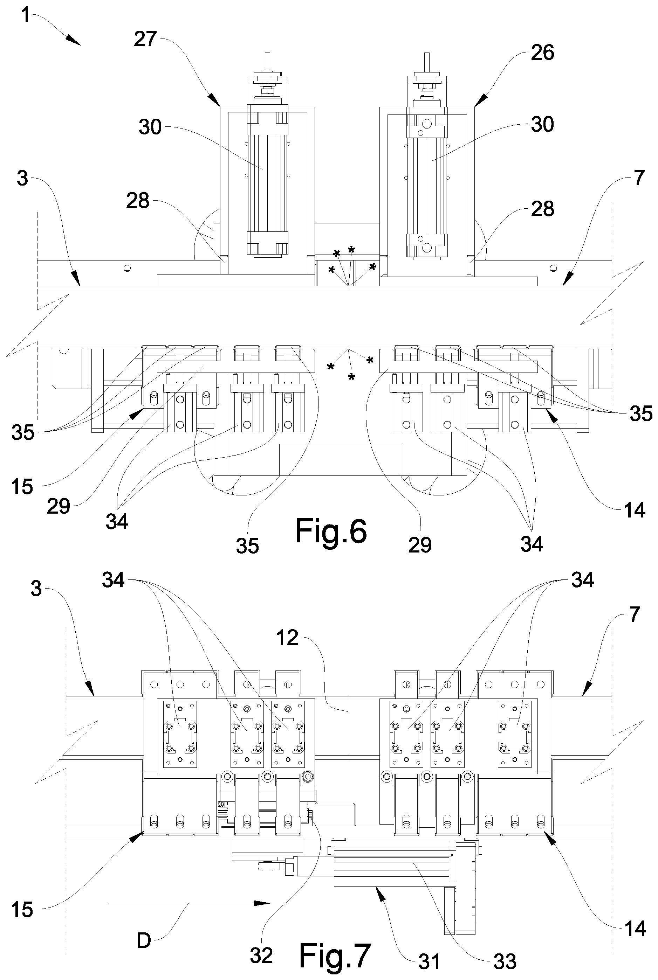

The bars 3, 7 are then brought close to each other to form the electric arc (Figures 5 and 6).

For this purpose, the resistance welding means 11 comprise a displacement system 31 adapted to mutually move the retaining assemblies 26, 27 between a moving away position, wherein the ending surfaces 4, 5 are spaced apart from each other, and a moving close position, wherein the ending surfaces 4, 5 are joined and pressed to each other.

Specifically, the first retaining assembly 26 is fixed with respect to the resistance welding means 11 while the second retaining assembly 27 is movable between the moving away position and the moving close position.

A reverse configuration cannot however be ruled out, i.e., one in which the second retaining assembly 27 is fixed with respect to the resistance welding means 11 while the first retaining assembly 26 is movable between the moving away position and the moving close position.

It cannot also be ruled out, that the retaining assemblies 26, 27 are both movable.

The displacement system 31 comprises a guiding body 32 associated with the resistance welding means 11, extending parallel to the direction of forward movement D and supporting the bearing plane 28 of the second retaining assembly 27 by sliding.

The displacement system 31 then comprises an actuator 33 positioned between the resistance welding means 11 and the second retaining assembly 27.

Specifically, the actuator 33 comprises a fixed part, associated with the resistance welding means 11, and a movable part connected to the bearing plane 28 of the second retaining assembly 27.

Advantageously, the displacement system 31 comprises a motorized actuator 33.

The actuator 33, therefore, allows moving the retaining means 25 in an extremely precise and accurate manner, enabling their position to be adjusted punctually.

The process then comprises the sub-phase of compression, which is also carried out by means of the displacement system 31 (Figure 7).

Specifically, the actuator 33 allows the position of the retaining assemblies 26, 27 to be adjusted during the phase of joining and the pressure given to the bars 3, 7 to be adjusted during the phase of compression.

At the end of welding, the electrode assemblies 14, 15 are moved to the home position, wherein they are moved away from the bars 3, 7, to open the electric circuit and to allow the cooling of the welding area 12.

Afterwards, the clamping assemblies 30 are also operated to release the welded bar 10.

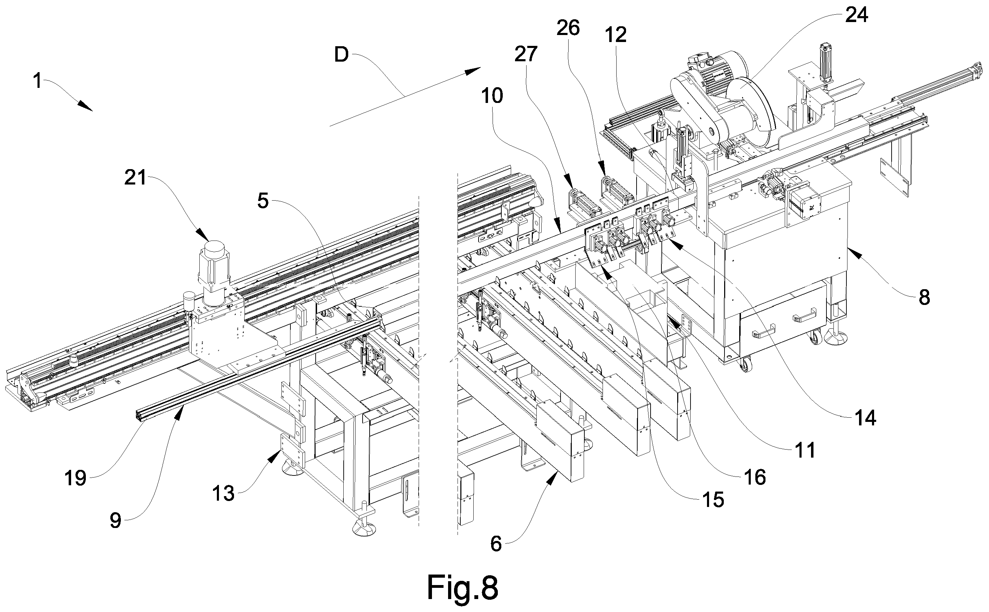

At this point, the positioning means 9 are operated to move the welded bar 10 forward along the direction of forward movement D and allow repeating the phases of cutting, positioning and welding for the welded bar 10 (Figure 8).

According to a further aspect, the present invention also refers to a plant 1 for the manufacture of reinforcing bars 100 for profiled elements for window/door frames.

The plant 1 according to the invention comprises:
- holding means 6 adapted to hold at least one first bar 2 and one second bar 3 made of at least one metallic material and extending along relevant longitudinal directions, each provided with a first ending surface 4 and with a second ending surface 5 substantially perpendicular to the relevant longitudinal direction;
- cutting means 8 adapted to cut the first bar 2 to obtain at least one reinforcing bar 100 insertable inside a relevant profiled element for window/door frames and a relevant residual bar 7 provided with the second ending surface 5;
- positioning means 9 adapted to move each of the bars 2, 3, 7 along at least one direction of forward movement D substantially parallel to the relevant longitudinal direction;
- retaining means 25 adapted to retain the residual bar 7 and the second bar 3 aligned to each other with respect to the direction of forward movement D, with the second ending surface 5 of the residual bar 7 facing the first ending surface 4 of the second bar 3;
- resistance welding means 11 adapted to butt weld the residual bar 7 and the second bar 3 by means of a current flow through the ending surfaces 4, 5 facing each other to obtain a welded bar 10.

It has in practice been ascertained that the described invention achieves the intended objects, and in particular, the fact is emphasized that the process and plant according to the invention for the manufacture of reinforcing bars for profiled elements for window/door frames makes it possible to avoid the formation of waste products. Thanks to the phase of welding carried out by means of the resistance welding means, the residual bars are always welded to a subsequent bar.

In addition, the present process and plant allow avoiding interruptions in the manufacture process and optimizing the operational timelines.

In this sense, therefore, the process and the plant according to the invention enable the production and operating costs of the production plant to be kept low.

## Claims

1. Process for the manufacture of reinforcing bars for profiled elements for window/door frames, **characterized by** the fact that it comprises the following phases:
- providing at least one first bar (2) and at least one second bar (3) made of at least one metallic material and extending along relevant longitudinal directions, each provided with a first ending surface (4) and with a second ending surface (5) substantially perpendicular to said relevant longitudinal direction;
- cutting said first bar (2) to obtain at least one reinforcing bar (100) insertable in a relevant profiled element for window/door frames and a residual bar (7) provided with said second ending surface (5);
- positioning said second bar (3) aligned with said residual bar (7) with respect to a direction of forward movement (D) substantially parallel to said longitudinal directions, with the first ending surface (4) of said second bar (3) facing the second ending surface (5) of said residual bar (7);
- resistance butt welding of said second bar (3) and of said residual bar (7) carried out by means of current flow through said ending surfaces (4, 5) facing each other to obtain a welded bar (10).

2. Process according to claim 1, **characterized by** the fact that it comprises repeating said phases of cutting, positioning and welding for said welded bar (10).

3. Process according to one or more of the preceding claims, **characterized by** the fact that said phases are carried out continuously on the same line of work (13) extending along said direction of forward movement (D).

4. Process according to one or more of the preceding claims, **characterized by** the fact that said phase of welding comprises a sub-phase of application of electrode assemblies (14, 15) to said second bar (3) and to said residual bar (7) at the point where the relevant ending surfaces (4, 5) are located to determine said current flow.

5. Process according to one or more of the preceding claims, **characterized by** the fact that said current has intensity comprised between 1 KA and 20 KA.

6. Process according to one or more of the preceding claims, **characterized by** the fact that said phase of welding comprises a sub-phase of joining said ending surfaces (4, 5) to each other to cause the formation of an electric arc.

7. Process according to one or more of the preceding claims, **characterized by** the fact that said sub-phase of joining is carried out subsequently to said phase of application of the electrode assemblies (14, 15).

8. Process according to claim 6, **characterized by** the fact that said sub-phase of joining is carried out prior to said phase of application of the electrode assemblies (14, 15).

9. Process according to one or more of the preceding claims, **characterized by** the fact that said sub-phase of joining is carried out for a time between 0.1" and 10", preferably between 1" and 5", even more preferably between 1.5" and 2".

10. Process according to one or more of the preceding claims, **characterized by** the fact that said phase of welding comprises a sub-phase of mutual compression of said ending surfaces (4, 5).

11. Process according to one or more of the preceding claims, **characterized by** the fact that said sub-phase of compression is carried out for a time between 0.5" and 7", preferably between 0.5" and 1.5".

12. Plant (1) for the manufacture of reinforcing bars for profiled elements for window/door frames, comprising:
- holding means (6) adapted to hold at least one first bar (2) and one second bar (3) made of at least one metallic material and extending along relevant longitudinal directions, each provided with a first ending surface (4) and with a second ending surface (5) substantially perpendicular to said relevant longitudinal direction;
the plant (1) being **characterised by** the following:
- cutting means (8) adapted to cut said first bar (2) to obtain at least one reinforcing bar (100) insertable inside a relevant profiled element for window/door frames and a relevant residual bar (7) provided with said second ending surface (5);
- positioning means (9) adapted to move each of said bars (2, 3, 7) along at least one direction of forward movement (D) substantially parallel to the relevant longitudinal direction;
- retaining means (25) adapted to retain said residual bar (7) and said second bar (3) aligned to each other with respect to said direction of forward movement (D), with said second ending surface (5) of said residual bar (7) facing the first ending surface (4) of said second bar (3);
- resistance welding means (11) adapted to butt weld said residual bar (7) and said second bar (3) by means of a current flow through said ending surfaces (4, 5) facing each other to obtain a welded bar (10).

13. Plant (1) according to claim 12, **characterized by** the fact that said holding means (6), said resistance welding means (11) and said cutting means (8) are arranged in succession along said direction of forward movement (D) along the same line of work (13).

14. Plant (1) according to claim 12 or 13, **characterized by** the fact that said resistance welding means (11) comprise electrode assemblies (14, 15) associated with said retaining means (25) and movable with respect thereto between a home position, wherein they are moved away from said residual bar (7) and from said second bar (3), and a work position, wherein they are in contact with said residual bar (7) and said second bar (3) and cause said current flow.

15. Plant (1) according to one or more of claims 12 to 14, **characterized by** the fact that said retaining means (25) comprise a first retaining assembly (26) of said residual bar (7) and a second retaining assembly (27) of said second bar (3), and by the fact that said resistance welding means (11) comprise a displacement system (31) adapted to mutually move said retaining assemblies (26, 27) between a moving away position, wherein said ending surfaces (4, 5) are spaced apart from each other, and a moving close position, wherein said ending surfaces (4, 5) are joined and pressed to each other.

## Patentansprüche

1. Verfahren zur Herstellung von Verstärkungsstäben für Profilelemente für Fenster- oder Türrahmen, **dadurch gekennzeichnet, dass** es die folgenden Schritte umfasst:
- Bereitstellen mindestens eines ersten Stabes (2) und mindestens eines zweiten Stabes (3), die aus mindestens einem metallischen Material hergestellt sind und sich entlang relevanter Längsrichtungen erstrecken, wobei jeder mit einer ersten Endfläche (4) und mit einer zweiten Endfläche (5) versehen ist, die im Wesentlichen senkrecht zu der relevanten Längsrichtung verlaufen;
- Schneiden des ersten Stabes (2), um mindestens einen Verstärkungsstab (100), der in ein relevantes Profilelement für Fenster- oder Türrahmen einsetzbar ist, und einen Reststab (7), der mit der zweiten Endfläche (5) versehen ist, zu erhalten;
- Positionieren des zweiten Stabes (3) in Ausrichtung auf den Reststab (7) in Bezug auf eine Vorwärtsbewegungsrichtung (D) im Wesentlichen parallel zu den Längsrichtungen, wobei die erste Endfläche (4) des zweiten Stabes (3) der zweiten Endfläche (5) des Reststabes (7) zugewandt ist;
- Pressstumpfschweißen des zweiten Stabes (3) und des Reststabes (7), was mittels eines Stromflusses durch die einander zugewandten Endflächen (4, 5) ausgeführt wird, um einen geschweißten Stab (10) zu erhalten.

2. Verfahren nach Anspruch 1, **dadurch gekennzeichnet, dass** es das Wiederholen der Schritte des Schneidens, Positionierens und Schweißens für den geschweißten Stab (10) umfasst.

3. Verfahren nach einem oder mehreren der vorangehenden Ansprüche, **dadurch gekennzeichnet, dass** die Schritte kontinuierlich auf derselben Arbeitslinie (13) ausgeführt werden, die sich entlang der Vorwärtsbewegungsrichtung (D) erstreckt.

4. Verfahren nach einem oder mehreren der vorangehenden Ansprüche, **dadurch gekennzeichnet, dass** der Schritte des Schweißens einen Teilschritt umfasst, in der Elektrodenanordnungen (14, 15) an dem zweiten Stab (3) und an dem Reststab (7) an dem Punkt angebracht werden, wo sich die relevanten Endflächen (4, 5) befinden, um den Stromfluss zu bestimmen.

5. Verfahren nach einem oder mehreren der vorangehenden Ansprüche, **dadurch gekennzeichnet, dass** der Strom eine Stärke zwischen 1 kA und 20 kA aufweist.

6. Verfahren nach einem oder mehreren der vorangehenden Ansprüche, **dadurch gekennzeichnet, dass** der Schritt des Schweißens einen Teilschritt des Verbindens der Endflächen (4, 5) miteinander umfasst, um die Bildung eines Lichtbogens zu bewirken.

7. Verfahren nach einem oder mehreren der vorangehenden Ansprüche, **dadurch gekennzeichnet, dass** der Teilschritt des Verbindens im Anschluss an den Schritt des Anbringens der Elektrodenanordnungen (14, 15) ausgeführt wird.

8. Verfahren nach Anspruch 6, **dadurch gekennzeichnet, dass** der Teilschritt des Verbindens vor dem Schritt des Anbringens der Elektrodenanordnungen (14, 15) ausgeführt wird.

9. Verfahren nach einem oder mehreren der vorangehenden Ansprüche, **dadurch gekennzeichnet, dass** der Teilschritt des Verbindens über eine Zeitdauer zwischen 0,1 Sekunden und 10 Sekunden, bevorzugt zwischen 1 Sekunde und 5 Sekunden, besonders bevorzugt zwischen 1,5 Sekunden und 2 Sekunden ausgeführt wird.

10. Verfahren nach einem oder mehreren der vorangehenden Ansprüche, **dadurch gekennzeichnet, dass** der Schritt des Schweißens einen Teilschritt des gegenseitigen Zusammendrückens der Endflächen (4, 5) umfasst.

11. Verfahren nach einem oder mehreren der vorangehenden Ansprüche, **dadurch gekennzeichnet, dass** der Teilschritt des Zusammendrückens über eine Zeitdauer zwischen 0,5 Sekunden und 7 Sekunden, bevorzugt zwischen 0,5 Sekunden und 1,5 Sekunden, ausgeführt wird.

12. Anlage (1) zur Herstellung von Verstärkungsstäben für Profilelemente für Fenster- oder Türrahmen, umfassend:
- ein Haltemittel (6), das dafür ausgelegt ist, mindestens einen ersten Stab (2) und einen zweiten Stab (3), die aus mindestens einem metallischen Material hergestellt sind und sich entlang relevanter Längsrichtungen erstrecken, zu halten, wobei jeder mit einer ersten Endfläche (4) und mit einer zweiten Endfläche (5) versehen ist, die im Wesentlichen senkrecht zu der relevanten Längsrichtung verlaufen; wobei die Anlage (1) durch Folgendes gekennzeichnet ist:
- ein Schneidmittel (8), das dafür ausgelegt ist, den ersten Stab (2) zu schneiden, um mindestens einen Verstärkungsstab (100), der in ein relevantes Profilelement für Fenster- oder Türrahmen einsetzbar ist, und einen relevanten Reststab (7), der mit der zweiten Endfläche (5) versehen ist, zu erhalten;
- ein Positionierungsmittel (9), das dafür ausgelegt ist, jeden der Stäbe (2, 3, 7) entlang mindestens einer Vorwärtsbewegungsrichtung (D) im Wesentlichen parallel zu der jeweiligen Längsrichtung zu bewegen;
- ein Haltemittel (25), das dafür ausgelegt ist, den Reststab (7) und den zweiten Stab (3) in Ausrichtung aufeinander in Bezug auf die Vorwärtsbewegungsrichtung (D) zu halten, wobei die zweite Endfläche (5) des Reststabes (7) der ersten Endfläche (4) des zweiten Stabes (3) zugewandt ist;
- ein Pressstumpfschweißmittel (11), das dafür ausgelegt ist, den Reststab (7) und den zweiten Stab (3) mittels eines Stromflusses durch die einander zugewandten Endflächen (4, 5) stumpfzuschweißen, um einen geschweißten Stab (10) zu erhalten.

13. Anlage (1) nach Anspruch 12, **dadurch gekennzeichnet, dass** das Haltemittel (6), das Pressstumpfschweißmittel (11) und das Schneidmittel (8) nacheinander entlang der Vorwärtsbewegungsrichtung (D) entlang derselben Arbeitslinie (13) angeordnet sind.

14. Anlage (1) nach Anspruch 12 oder 13, **dadurch gekennzeichnet, dass** das Pressstumpfschweißmittel (11) Elektrodenanordnungen (14, 15) umfasst, die dem Haltemittel (25) zugeordnet sind und in Bezug auf dieses zwischen einer Ausgangsposition, in der sie von dem Reststab (7) und von dem zweiten Stab (3) fort bewegt sind, und einer Arbeitsposition, in der sie mit dem Reststab (7) und dem zweiten Stab (3) in Kontakt stehen und den Stromfluss bewirken, beweglich sind.

15. Anlage (1) nach einem oder mehreren der Ansprüche 12 bis 14, **dadurch gekennzeichnet, dass** das Haltemittel (25) eine erste Halteanordnung (26) für den Reststab (7) und eine zweite Halteanordnung (27) für den zweiten Stab (3) umfasst, und dadurch, dass das Pressstumpfschweißmittel (11) ein Verschiebungssystem (31) umfasst, das dafür ausgelegt ist, die Halteanordnungen (26, 27) relativ zueinander zwischen einer Auseinanderbewegungsposition, in der die Endflächen (4, 5) voneinander beabstandet sind, und einer Zueinanderbewegungsposition, in der die Endflächen (4, 5) miteinander verbunden und gegeneinander gedrückt sind, zu bewegen.

## Revendications

1. - Procédé de fabrication de barres de renforcement pour des éléments profilés pour des cadres de fenêtres/portes, **caractérisé par le fait qu'**il comprend les phases suivantes :
- fourniture d'au moins une première barre (2) et d'au moins une seconde barre (3) faites en au moins un matériau métallique et s'étendant le long de directions longitudinales correspondantes, chacune comportant une première surface d'extrémité (4) et une seconde surface d'extrémité (5) sensiblement perpendiculaires à ladite direction longitudinale correspondante ;
- coupe de ladite première barre (2) pour obtenir au moins une barre de renforcement (100) apte à être introduite dans un élément profilé correspondant pour des cadres de fenêtres/portes et une barre résiduelle (7) comportant ladite seconde surface d'extrémité (5) ;
- positionnement de ladite seconde barre (3) alignée avec ladite barre résiduelle (7) par rapport à une direction de mouvement vers l'avant (D) sensiblement parallèle auxdites directions longitudinales, la première surface d'extrémité (4) de ladite seconde barre (3) faisant face à la seconde surface d'extrémité (5) de ladite barre résiduelle (7) ;
- soudage en bout par résistance de ladite seconde barre (3) et de ladite barre résiduelle (7) effectué au moyen d'un flux de courant à travers lesdites surfaces d'extrémité (4, 5) se faisant face pour obtenir une barre soudée (10).

2. - Procédé selon la revendication 1, **caractérisé par le fait qu'**il comprend la répétition desdites phases de coupe, de positionnement et de soudage pour ladite barre soudée (10).

3. - Procédé selon l'une ou plusieurs des revendications précédentes, **caractérisé par le fait que** lesdites phases sont réalisées en continu sur la même ligne de travail (13) s'étendant le long de ladite direction de mouvement vers l'avant (D).

4. - Procédé selon l'une ou plusieurs des revendications précédentes, **caractérisé par le fait que** ladite phase de soudage comprend une sous-phase d'application d'ensembles d'électrodes (14, 15) sur ladite seconde barre (3) et sur ladite barre résiduelle (7) à l'endroit où se trouvent les surfaces d'extrémité correspondantes (4, 5) pour déterminer ledit flux de courant.

5. - Procédé selon l'une ou plusieurs des revendications précédentes, **caractérisé par le fait que** ledit courant a une intensité comprise entre 1 KA et 20 KA.

6. - Procédé selon l'une ou plusieurs des revendications précédentes, **caractérisé par le fait que** ladite phase de soudage comprend une sous-phase d'assemblage desdites surfaces d'extrémité (4, 5) entre elles pour provoquer la formation d'un arc électrique.

7. - Procédé selon l'une ou plusieurs des revendications précédentes, **caractérisé par le fait que** ladite sous-phase d'assemblage est réalisée postérieurement à ladite phase d'application des assemblages d'électrodes (14, 15).

8. - Procédé selon la revendication 6, **caractérisé par le fait que** ladite sous-phase d'assemblage est réalisée avant ladite phase d'application des assemblages d'électrodes (14, 15).

9. - Procédé selon l'une ou plusieurs des revendications précédentes, **caractérisé par le fait que** ladite sous-phase d'assemblage est réalisée pendant un temps compris entre 0,1" et 10", de préférence entre 1" et 5", de façon encore plus préférée entre 1,5" et 2".

10. - Procédé selon l'une ou plusieurs des revendications précédentes, **caractérisé par le fait que** ladite phase de soudage comprend une sous-phase de compression mutuelle desdites surfaces d'extrémité (4, 5).

11. - Procédé selon l'une ou plusieurs des revendications précédentes, **caractérisé par le fait que** ladite sous-phase de compression est réalisée pendant un temps compris entre 0,5" et 7", de préférence entre 0,5" et 1,5".

12. - Installation (1) pour la fabrication de barres de renforcement pour des éléments profilés pour des cadres de fenêtres/portes, comprenant :
- des moyens de maintien (6) aptes à maintenir au moins une première barre (2) et une seconde barre (3) faites en au moins un matériau métallique et s'étendant le long de directions longitudinales correspondantes, chacune comportant une première surface d'extrémité (4) et une seconde surface d'extrémité (5) sensiblement perpendiculaires à ladite direction longitudinale correspondante ;
l'installation (1) étant **caractérisée par** ce qui suit :
- des moyens de coupe (8) aptes à couper ladite première barre (2) afin d'obtenir au moins une barre de renforcement (100) apte à être introduite à l'intérieur d'un élément profilé correspondant pour des cadres de fenêtres/portes et une barre résiduelle correspondante (7) comportant ladite seconde surface d'extrémité (5) ;
- des moyens de positionnement (9) aptes à déplacer chacune desdites barres (2, 3, 7) le long d'au moins une direction de mouvement vers l'avant (D) sensiblement parallèle à la direction longitudinale correspondante ;
- des moyens de retenue (25) aptes à retenir ladite barre résiduelle (7) et ladite seconde barre (3) alignées entre elles par rapport à ladite direction de mouvement vers l'avant (D), ladite seconde surface d'extrémité (5) de ladite barre résiduelle (7) faisant face à la première surface d'extrémité (4) de ladite seconde barre (3) ;
- des moyens de soudage par résistance (11) aptes à souder en bout ladite barre résiduelle (7) et ladite seconde barre (3) au moyen d'un flux de courant à travers lesdites surfaces d'extrémité (4, 5) se faisant face pour obtenir une barre soudée (10).

13. - Installation (1) selon la revendication 12, **caractérisée par le fait que** lesdits moyens de maintien (6), lesdits moyens de soudage par résistance (11) et lesdits moyens de coupe (8) sont disposés successivement le long de ladite direction de mouvement vers l'avant (D) le long de la même ligne de travail (13).

14. - Installation (1) selon la revendication 12 ou 13, **caractérisée par le fait que** lesdits moyens de soudage par résistance (11) comprennent des ensembles d'électrodes (14, 15) associés auxdits moyens de retenue (25) et déplaçables par rapport à ceux-ci entre une position de repos, dans laquelle ils sont éloignés de ladite barre résiduelle (7) et de ladite seconde barre (3), et une position de travail, dans laquelle ils sont en contact avec ladite barre résiduelle (7) et ladite seconde barre (3) et provoquent ledit flux de courant.

15. - Installation (1) selon l'une ou plusieurs des revendications 12 à 14, **caractérisée par le fait que** lesdits moyens de retenue (25) comprennent un premier ensemble de retenue (26) de ladite barre résiduelle (7) et un second ensemble de retenue (27) de ladite seconde barre (3), et **par le fait que** lesdits moyens de soudage par résistance (11) comprennent un système de déplacement (31) apte à déplacer mutuellement lesdits ensembles de retenue (26, 27) entre une position d'éloignement, dans laquelle lesdites surfaces d'extrémité (4, 5) sont espacées l'une de l'autre, et une position de rapprochement, dans laquelle lesdites surfaces d'extrémité (4, 5) sont réunies et pressées l'une contre l'autre.
